# EUROPEAN PATENT APPLICATION

(11) **EP 4 737 112 A1**
(43) Date of publication of application: **06.05.2026**
(21) Application number: 24209992.7
(22) Date of filing: 30.10.2024
(51) Int. Cl.: B32B 3/26, B32B 5/02, B32B 5/26, B32B 7/12

(54) **COMPOSITE FABRIC**

(71) Applicant: Neenah Gessner GmbH, 83052 Bruckmühl (DE)
(72) Inventor: WILLNECKER, Eva, 83502 Bruckmühl (DE); WINTERER, Franziska, 83502 Bruckmühl (DE); GRAVOT, Simon, 83502 Bruckmühl (DE)
(74) Representative: Haseltine Lake Kempner LLP

(57) **Abstract**

Described herein is a composite fabric. The composite fabric may comprise a melt-blown thermoplastic elastomer layer; and a thermoplastic elastomer netting layer. The thermoplastic netting layer may comprise apertures with a longest dimension of at least about 0.5 mm; and have a thickness of at least about 0.25 mm. Also described herein is a method of producing a composite fabric comprising a melt-blown thermoplastic elastomer layer and a thermoplastic elastomer netting layer.

## Description

### BACKGROUND OF THE INVENTION

Melt-blown fabrics have a number of different uses, from hygiene and textiles to industrial materials and filtration materials. Unfortunately, melt-blown nonwovens have a low tear resistance compared with textile webs because the melt-blown fibres are very fine and randomly oriented.

### SUMMARY OF THE INVENTION

In an aspect, there is provided a composite fabric. The composite fabric may comprise a melt-blown thermoplastic elastomer layer and a thermoplastic elastomer netting layer. The netting layer may comprise apertures with a longest dimension of at least about 0.5 mm. The netting layer may have a thickness of at least about 0.25 mm.

Also described herein are methods of producing a composite fabric. The method may comprise melt-blowing a thermoplastic elastomer onto a thermoplastic elastomer netting layer. Alternatively, the method may comprise laminating a melt-blown thermoplastic elastomer layer to a thermoplastic elastomer netting layer. In some examples, the lamination process may comprise heat sealing, for example, ultrasonic sealing, calendering or the like.

Although thermoplastic elastomer melt-blown fabrics (e.g., thermoplastic polyurethane (TPU) melt-blown fabrics) have a high tear resistance, once a hole or tear has been formed, the individual fibres cannot withstand the tearing force and the hole or tear increases in size. The present inventors have found that a composite formed from a combination of a melt-blown elastomer fabric (e.g., a melt-blown TPU fabric) with an elastomer net (e.g., a TPU net) shows unexpectedly reduced tear propagation, resulting in a significant improvement in durability of the melt-blown elastomer fabric.

### DETAILED DESCRIPTION OF THE INVENTION

Before the present disclosure is disclosed and described, it is to be understood that this disclosure is not limited to the particular process steps and materials disclosed herein because such process steps and materials may vary somewhat. It is also to be understood that the terminology used herein is used for the purpose of describing particular embodiments. The terms are not intended to be limiting because the scope is intended to be limited by the appended claims and equivalents thereof.

It is noted that, as used in this specification and the appended claims, the singular forms "a," "an," and "the" include plural referents unless the context clearly dictates otherwise.

As used herein, "co-polymer" refers to a polymer that is polymerized from at least two monomers.

If a standard test is mentioned herein, unless otherwise stated, the version of the test to be referred to is the most recent at the time of filing this patent application.

As used herein, the term "about" is used to provide flexibility to a numerical range endpoint by providing that a given value may be a little above or a little below the endpoint to allow for variation in test methods or apparatus. The degree of flexibility of this term can be dictated by the particular variable and would be within the knowledge of those skilled in the art to determine based on experience and the associated description herein.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Concentrations, amounts, and other numerical data may be expressed or presented herein in a range format. It is to be understood that such a range format is used merely for convenience and brevity and thus should be interpreted flexibly to include not just the numerical values explicitly recited as the limits of the range, but also to include all the individual numerical values or sub-ranges encompassed within that range as if each numerical value and sub-range is explicitly recited. As an illustration, a numerical range of "about 1 mm to about 5 mm" should be interpreted to include not just the explicitly recited values of about 1 mm to about 5 mm, but also to include individual values and sub-ranges within the indicated range. Thus, included in this numerical range are individual values such as 2, 3.5, and 4 and sub-ranges such as from 1-3, from 2-4, and from 3-5, etc. This same principle applies to ranges reciting a single numerical value. Furthermore, such an interpretation should apply regardless of the breadth of the range or the characteristics being described.

Unless otherwise stated, any feature described herein can be combined with any aspect or any other feature described herein.

### Composite Fabric

In an aspect, there is provided a composite fabric. The composite fabric may comprise a melt-blown thermoplastic elastomer layer; and a thermoplastic elastomer netting layer. In some example, the composite fabric may comprise a melt-blown thermoplastic elastomer layer; and a thermoplastic polyurethane netting layer. In some examples, the composite fabric may comprise a melt-blown thermoplastic polyurethane layer; and a thermoplastic elastomer netting layer. In some examples, the composite fabric may comprise a melt-blown thermoplastic polyurethane layer; and a thermoplastic polyurethane netting layer. In some examples, the melt-blown thermoplastic elastomer layer (e.g., the melt-blown thermoplastic polyurethane layer) is in contact with the thermoplastic elastomer netting layer (e.g., the thermoplastic polyurethane netting layer). In some examples, an additional layer may be disposed between the melt-blown thermoplastic elastomer layer (e.g., the melt-blown TPU layer) and the thermoplastic elastomer netting layer (e.g., the TPU netting layer). In some examples, the additional layer may be or comprise an adhesive layer, an additional melt-blown layer, a film layer, or a combination thereof. In some examples, the additional layer may be or comprise an adhesive layer.

In some examples, the melt-blown thermoplastic elastomer (e.g., TPU) layer and the thermoplastic elastomer (e.g., TPU) netting layer may adhere directly to each other. In other examples, an adhesive layer may be disposed between the melt-blown thermoplastic elastomer (e.g., TPU) layer and the thermoplastic elastomer (e.g., TPU) netting layer.

The melt-blown thermoplastic elastomer (e.g., TPU) layer may be laminated to the thermoplastic elastomer (e.g., TPU) netting layer. In some examples, the melt-blown thermoplastic elastomer (e.g., TPU) layer may have been deposited directly onto the thermoplastic elastomer (e.g., TPU) netting layer and the temperature of the melt-blowing step may have induced adhesion between the melt-blown thermoplastic elastomer (e.g., TPU) layer and the thermoplastic elastomer (e.g., TPU) netting layer. In other examples, a post-production lamination process may have been used to induce adhesion between the melt-blown thermoplastic elastomer (e.g., TPU) layer and the thermoplastic elastomer (e.g., TPU) netting layer. In some examples, the post-production lamination process may comprise heat sealing (such as ultrasonic sealing, or calendering). In other examples, an adhesive layer may be disposed between the melt-blown thermoplastic elastomer (e.g., TPU) layer and the thermoplastic elastomer (e.g., TPU) netting layer.

### Netting layer

The composite fabric comprises a thermoplastic elastomer netting layer. The thermoplastic elastomer netting layer may comprise or consist of any thermoplastic elastomer. The thermoplastic elastomer netting layer may comprise or consist of a netting layer formed from any thermoplastic elastomer or any mixture of thermoplastic elastomers. The thermoplastic elastomer netting layer may comprise or consist of any thermoplastic elastomer described herein or any mixture of thermoplastic elastomers described herein.

In some examples, the thermoplastic elastomer netting layer is a thermoplastic polyurethane (TPU) netting layer, a thermoplastic styrene (TPS) elastomer netting layer, a thermoplastic polyamide (TPA) netting layer, a thermoplastic copolyester (TPC) netting layer, a thermoplastic polyolefin (TPO) netting layer, or a combination thereof. In some examples, the thermoplastic elastomer netting layer is a thermoplastic polyurethane (TPU) netting layer.

The thermoplastic elastomer netting layer may be referred to herein as the netting layer. The netting layer may comprise apertures with a longest dimension of at least about 0.5 mm. In some examples, the netting layer has a thickness of at least about 0.25 mm.

The thermoplastic polyurethane netting layer may comprise any TPU polymer. The TPU netting layer may comprise or consist of a netting layer formed from any TPU polymer or a mixture of TPU polymers. The TPU netting layer may comprise or consist of any TPU polymer described herein or any mixture of TPU polymers described herein.

The thermoplastic elastomer netting layer may comprise an extruded thermoplastic elastomer netting layer (e.g., an extruded TPU netting layer). The extruded thermoplastic elastomer netting layer (e.g., the extruded TPU netting layer) may be formed by extruding a thermoplastic elastomer (e.g., a TPU polymer) or a composition comprising a thermoplastic elastomer (e.g., a TPU polymer). The extruded thermoplastic elastomer netting layer (e.g., the extruded TPU netting layer) may be formed by extruding any thermoplastic elastomer (e.g., any TPU polymer) described herein or a composition comprising any thermoplastic elastomer (e.g., any TPU polymer) described herein.

The thermoplastic elastomer of the netting layer may be the same as or different from the thermoplastic elastomer of the melt-blown layer. In some examples, the thermoplastic polyurethane of the netting layer may be the same as or different from the thermoplastic polyurethane of the melt-blown layer. The thermoplastic elastomer (e.g., the thermoplastic polyurethane) of the netting layer may be similar to or identical to the thermoplastic elastomer (e.g., the thermoplastic polyurethane) of the melt-blown layer. The thermoplastic elastomer (e.g., the TPU) of the netting layer may be a polymer producible from the same monomers as the thermoplastic elastomer (e.g., the TPU) of the melt-blown layer. The thermoplastic elastomer (e.g., TPU) of the netting layer may be a polymer producible from the same class of monomers as the monomers of the thermoplastic elastomer (e.g., TPU) melt-blown layer. The thermoplastic elastomer (e.g., TPU) of the netting layer may be a polymer comprising the same class of monomers, for example, the same monomers as the thermoplastic elastomer (e.g., TPU) of the melt-blown layer, and the Shore hardness of the thermoplastic elastomer (e.g., TPU polymer) of the netting layer may be within 10%, for example, within 5% or identical to the Shore hardness of the thermoplastic elastomer (e.g., TPU polymer) of the melt-blown layer

In some examples, the netting layer may comprise apertures of any shape. In some examples, the netting layer may comprise a regular array of apertures or an irregular array of apertures. In some examples, the apertures may be of any tessellating shape or combination of tessellating shapes. In some examples, the netting layer may comprise square apertures, circular apertures, oval apertures, rectangular apertures, rhombus apertures, trapezoid apertures, parallelogram apertures, diamond apertures, hexagonal apertures, triangle apertures, diamond apertures, or irregularly shaped apertures. In some examples, the netting layer may comprise square apertures.

The thermoplastic elastomer (e.g., thermoplastic polyurethane) netting layer may be an extruded thermoplastic elastomer (e.g., TPU) netting layer. In some examples, the extruded thermoplastic elastomer netting layer may comprise machine-direction strands and cross-direction strands. In some examples, the extruded thermoplastic elastomer netting may be formed by a two-way extrusion process (e.g., by extruding strands in the machine direction (MD) and the cross-direction (CD)), a three-way extrusion process (e.g., by extruding strands in the machine direction and two different directions at an angle to the machine direction), a four-way extrusion process (e.g., by extruding strands in the machine direction, the cross direction and at two additional angles). In some examples, a three-way extrusion process may produce triangular apertures. In some examples, a four-way extrusion process may produce a pattern produced by overlaying square apertures with diamond apertures, resulting in an array of triangular apertures). In some examples, the extruded thermoplastic netting layer may comprise machine-direction strands and cross-direction strands and the machine direction strands may be substantially perpendicular or perpendicular to the cross-direction strands. In some examples, the extruded thermoplastic netting layer may comprise machine-direction strands and cross-direction strands and the machine direction strands may be perpendicular to the cross-direction strands

In some examples, the strands of the netting layer have a thickness of up to about 1 mm, for example, up to about 950 µm, up to about 900 µm, up to about 850 µm, up to about 800 µm, up to about 750 µm, up to about 700 µm, up to about 690 µm, or up to about 680 µm. In some examples, the strands of the netting layer have a thickness of at least about 100 µm, for example, at least about 150 µm, at least about 200 µm, at least about 250 µm, at least about 300 µm, at least about 350 µm, at least about 360 µm, or at least about 370 µm. In some examples, the strands of the netting layer have a thickness of from about 100 µm to about 1 mm, for example, about 150 µm to about 950 µm, about 200 µm to about 900 µm, about 250 µm to about 850 µm, about 300 µm to about 800 µm, about 350 µm to about 750 µm, about 360 µm to about 700 µm, about 370 µm to about 690 µm or about 370 µm to about 680 µm.. As used herein, the thickness of the strands may be the distance across the stand in a direction perpendicular to the thickness of the netting layer and perpendicular to the direction of the strand. In some examples, the thickness of the strands may be the minimum thickness of the strands in a direction perpendicular to the thickness of the netting layer. In some examples, the thickness of the machine direction strands may be the same as or different from the thickness of the cross direction strands. In some examples, the machine direction strands may be thinner than the cross direction strands. In some examples, the machine direction strands may be at least half the thickness of the cross direction strands. In some examples, the machine direction strands may be less than two-thirds of the thickness of the cross direction strands. In some examples, the machine direction strands may be between one half and two-thirds of the thickness of the cross direction strands. The thickness of the strands may be measured by scanning electron microscopy.

In some examples, the machine direction strands have a thickness of at least about 100 µm, for example, at least about 150 µm, at least about 200 µm, at least about 250 µm, at least about 300 µm, at least about 350 µm, at least about 360 µm, or at least about 370 µm. In some examples, the machine direction strands have a thickness of up to about 700 µm, for example, up to about 650 µm, up to about 600 µm, up to about 550 µm, up to about 500 µm, up to about 450 µm, up to about 400 µm, or up to about 390 µm. In some examples, the machine direction strands have a thickness of from about 100 µm to about 700 µm, for example, about 150 µm to about 650 µm, about 200 µm to about 600 µm, about 250 µm to about 550 µm, about 300 µm to about 500 µm, about 350 µm to about 450 µm, about 360 µm to about 400 µm, about 370 µm to about 490 µm, or about 380 µm to about 385 µm.. In some examples, the cross-direction strands have a thickness of up to about 1 mm, for example, up to about 950 µm, up to about 900 µm, up to about 850 µm, up to about 800 µm, up to about 750 µm, up to about 700 µm, up to about 690 µm, or up to about 680 µm. In some examples, the cross direction strands have a thickness of at least about 400 µm, at least about 450 µm, at least about 500 µm, at least about 550 µm, at least about 600 µm, at least about 650 µm, at least about 660 µm, or at least about 670 µm. In some examples, the cross-direction strands have a thickness of from about 400 µm to about 1 mm, for example, about 450 µm to about 950 µm, about 500 µm to about 900 µm, about 550 µm to about 850 µm, about 600 µm to about 800 µm, about 650 µm to about 750 µm, about 660 µm to about 700 µm, about 670 µm to about 690 µm, or about 675 µm to about 680 µm.

In some examples, the thermoplastic elastomer (e.g., TPU) netting layer has a strand count of up to about 20 strands per cm in the machine direction, for example, up to about 19 strands per cm, up to about 18 strands per cm, up to about 17 strands per cm, up to about 16 strands per cm, up to about 15 strands per cm, up to about 14 strands per cm, up to about 13 strands per cm, up to about 12 strands per cm, up to about 11 strands per cm in the machine direction. In some examples, the thermoplastic elastomer (e.g., TPU) netting layer has a strand count of at least about 5 strands per cm in the machine direction, for example, at least about 6 strands per cm, at least about 7 strands per cm, at least about 8 strands per cm, at least about 9 strands per cm, at least about 10 strands per cm, at least about 11 strands per cm, at least about 12 strands per cm, at least about 13 strands per cm, at least about 14 strands per cm, or at least about 15 strands per cm in the machine direction. In some examples, the thermoplastic elastomer (e.g., TPU) netting layer has a strand count of from about 5 strands per cm to about 20 strands per cm in the machine direction, for example, from about 6 strands per cm to about 19 strands per cm, about 7 strands per cm to about 18 strands per cm, about 8 strands per cm to about 17 strands per cm, about 9 strands per cm to about 16 strands per cm, about 10 strands per cm to about 15 strands per cm in the machine direction. In some examples, the strand count may be determined by ASTM D3775.

In some examples, the thermoplastic elastomer (e.g., TPU) netting layer has a strand count of up to about 20 strands per cm in the cross direction, for example, up to about 19 strands per cm, up to about 18 strands per cm, up to about 17 strands per cm, up to about 16 strands per cm, up to about 15 strands per cm, up to about 14 strands per cm, up to about 13 strands per cm, up to about 12 strands per cm, up to about 11 strands per cm in the cross direction. In some examples, the thermoplastic elastomer (e.g., TPU) netting layer has a strand count of at least about 5 strands per cm in the cross direction, for example, at least about 6 strands per cm, at least about 7 strands per cm, at least about 8 strands per cm, at least about 9 strands per cm, at least about 10 strands per cm, at least about 11 strands per cm, at least about 12 strands per cm, at least about 13 strands per cm, at least about 14 strands per cm, or at least about 15 strands per cm in the cross direction. In some examples, the thermoplastic elastomer (e.g., TPU) netting layer has a strand count of from about 5 strands per cm to about 20 strands per cm in the cross direction, for example, from about 6 strands per cm to about 19 strands per cm, about 7 strands per cm to about 18 strands per cm, about 8 strands per cm to about 17 strands per cm, about 9 strands per cm to about 16 strands per cm, about 10 strands per cm to about 15 strands per cm in the cross direction.

In some examples, the thermoplastic elastomer (e.g., TPU) netting layer has a strand count of up to about 20 strands per cm in the machine direction, for example, up to about 19 strands per cm, up to about 18 strands per cm, up to about 17 strands per cm, up to about 16 strands per cm, up to about 15 strands per cm, up to about 14 strands per cm, up to about 13 strands per cm, up to about 12 strands per cm, up to about 11 strands per cm in the machine direction; and a strand count of up to about 20 strands per cm in the cross direction, for example, up to about 19 strands per cm, up to about 18 strands per cm, up to about 17 strands per cm, up to about 16 strands per cm, up to about 15 strands per cm, up to about 14 strands per cm, up to about 13 strands per cm, up to about 12 strands per cm, up to about 11 strands per cm in the cross direction. In some examples, the thermoplastic elastomer (e.g., TPU) netting layer has a strand count of at least about 5 strands per cm in the machine direction, for example, at least about 6 strands per cm, at least about 7 strands per cm, at least about 8 strands per cm, at least about 9 strands per cm, at least about 10 strands per cm, at least about 11 strands per cm, at least about 12 strands per cm, at least about 13 strands per cm, at least about 14 strands per cm, or at least about 15 strands per cm in the machine direction; and a strand count of at least about 5 strands per cm in the cross direction, for example, at least about 6 strands per cm, at least about 7 strands per cm, at least about 8 strands per cm, at least about 9 strands per cm, at least about 10 strands per cm, at least about 11 strands per cm, at least about 12 strands per cm, at least about 13 strands per cm, at least about 14 strands per cm, or at least about 15 strands per cm in the cross direction. In some examples, the thermoplastic elastomer (e.g., TPU) netting layer has a strand count of from about 5 strands per cm to about 20 strands per cm in the machine direction, for example, from about 6 strands per cm to about 19 strands per cm, about 7 strands per cm to about 18 strands per cm, about 8 strands per cm to about 17 strands per cm, about 9 strands per cm to about 16 strands per cm, about 10 strands per cm to about 15 strands per cm in the machine direction; and a strand count of from about 5 strands per cm to about 20 strands per cm in the cross direction, for example, from about 6 strands per cm to about 19 strands per cm, about 7 strands per cm to about 18 strands per cm, about 8 strands per cm to about 17 strands per cm, about 9 strands per cm to about 16 strands per cm, about 10 strands per cm to about 15 strands per cm in the cross direction. In some examples, the strand count in the machine direction is similar to or different from the strand count in the cross direction. In some examples, the strand count in the machine direction is similar to the strand count in the cross direction if the difference between the two strand counts is less than about 5 strands per cm, for example, less than about 4 strands per cm, less than about 2 strands per cm, or less than 1 strand per cm.

In some examples, the netting layer comprises apertures with a longest dimension of at least about 0.5 mm, for example, at least about 0.75 mm, at least about 1 mm, at least about 1.25 mm, at least about 1.5 mm, at least about 1.6 mm, at least about 1.7 mm, at least about 1.75 mm, at least about 1.8 mm, at least about 1.9 mm. In some examples, the netting layer comprises apertures with a longest dimension of up to about 5 mm, for example, up to about 4.5 mm, up to about 4 mm, up to about 3.5 mm, up to about 3.25 mm, up to about 3 mm, up to about 2.95 mm, up to about 2.9 mm. In some examples, the netting layer comprises a longest dimension of from about 0.5 mm to about 5 mm, for example, from about 0.75 mm to about 4.5 mm, about 1 mm to about 4 mm, about 1.25 mm to about 3.5 mm, about 1.5 mm to about 3.25 mm, about 1.6 mm to about 3.2 mm, about 1.7 mm to about 3.1 mm, about 1.8 mm to about 3 mm, about 1.9 mm to about 2.95 mm. The longest dimension of an aperture may be the longest distance across the aperture, for example, the longest distance from an edge (e.g., a first edge) of the aperture to an opposing (e.g., second) edge of the aperture, from a corner (e.g., a first corner) of the aperture to an opposing (e.g., second) corner of the aperture or from a corner (e.g., a first corner) of the aperture to an opposing edge (e.g., a first edge) of the aperture. In some examples, the longest dimension of an aperture may be the diameter of a circular aperture, the longest diameter of an oval aperture, the diagonal of a square or rectangular aperture, and so forth.

In some examples, the netting layer may comprise apertures with a shortest dimension of at least about 0.5 mm, for example, at least about 0.55 mm, at least about 0.6 mm, at least about 0.65 mm, at least about 0.7 mm. In some examples, the netting layer may comprise apertures with a shortest dimension of up to about 5 mm, for example, up to about 2 mm, up to about 1.5 mm, up to about 1 mm, up to about 0.95 mm, up to about 0.9 mm, up to about 0.85 mm. In some examples, the netting layer may comprise apertures with a shortest dimension of from about 0.5 mm to about 5 mm, for example, about 0.5 mm to about 2 mm, about 0.55 mm to about 1.5 mm, about 0.6 mm to about 1 mm, about 0.65 mm to about 0.95 mm, about 0.7 mm to about 0.9 mm. In some examples, the shortest dimension of an aperture may be the shortest distance across an aperture, for example, the shortest distance from an edge (e.g., a first edge) of the aperture to an opposing edge (e.g., a second edge opposite the first edge). In some examples, the netting layer may comprise circular apertures and the shortest dimension may be equal to the largest dimension (i.e., the diameter of the circular apertures). In some examples, the netting layer may comprise oval apertures and the shortest dimension may be the shorter diameter of the oval apertures. In some examples, the netting layer may comprise square or rectangular apertures and the shortest dimension may be the width of the apertures, which may be referred to herein as the second longest side of the apertures.

In some examples, the netting layer may comprise apertures with a second longest dimension of at least about 0.5 mm, for example, at least about 1 mm, at least about 1.25 mm, at least about 1.5 mm, at least about 1.55 mm, at least about 1.6 mm, at least about 1.65 mm, at least about 1.7 mm, at least about 1.75 mm, at least about 1.8 mm. In some examples, the netting layer may comprise apertures with a second longest dimension of up to about 5 mm, for example, up to about 4.5 mm, up to about 4 mm, up to about 3.5 mm, up to about 3.4 mm, up to about 3.3 mm, up to about 3.2 mm, up to about 3.1 mm, up to about 3 mm, up to about 2.9 mm, up to about 2.8 mm. The second longest dimension of an aperture may be identical to the shortest dimension of the aperture. In some examples, the second longest dimension of an aperture may be larger than the shortest dimension of the aperture. In some examples, netting layer may comprise circular apertures and the second longest dimension may be equal to both the largest dimension and the shortest dimension (i.e., the diameter of the circular apertures). In some examples, the netting layer may comprise square apertures and the second longest dimension of the apertures may be identical to the shortest dimension of the apertures. In some examples, the netting layer may comprise rectangular apertures and the second longest dimension may be the length of the apertures, which may be referred to herein as the longest side of the apertures.

In some examples, the netting layer comprises square or rectangular apertures with a longest dimension (i.e., the diagonal) of from about 0.5 mm to about 5 mm, for example, from about 1.5 mm to about 3.25 mm or from about 1.9 mm to about 2.95 mm; a second longest dimension (i.e., the length) of from about 0.5 mm to about 3.5 mm, for example, from about 1.5 mm to about 3 mm, or about 1.75 mm to about 2.85 mml and a shortest dimension (i.e., the width) of from about 0.5 mm to about 3.5 mm, for example, from about 0.5 mm to about 1 mm, for example, from about 0.7 mm to about 0.9 mm. In some examples, the netting layer comprises square or rectangular apertures with a longest side of from about 0.5 mm to about 5 mm, for example, from about 1.5 mm to about 3 mm; and a shortest side of from about 0.5 mm to about 5 mm, for example, from about 0.5 mm to about 1 mm.

In some examples, the netting layer has a thickness of at least about 0.25 mm, for example, at least about 0.3 mm, at least about 0.35 mm, at least about 0.4 mm, at least about 0.45 mm, at least about 0.5 mm, at least about 0.55 mm, at least about 0.6 mm, at least about 0.65 mm, at least about 0.7 mm, at least about 0.75 mm, at least about 0.8 mm, at least about 0.85 mm, at least about 0.9 mm, at least about 0.95 mm, or at least about 1 mm. In some examples, the netting layer has a thickness of up to about 1 mm, for example, up to about 0.95 mm, up to about 0.9 mm, up to about 0.85 mm, up to about 0.8 mm, up to about 0.75 mm, up to about 0.7 mm, up to about 0.65 mm, up to about 0.6 mm, up to about 0.55 mm, up to about 0.5 mm, up to about 0.45 mm, up to about 0.4 mm, up to about 0.35 mm, or up to about 0.3 mm, or up to about 0.25 mm. In some examples, the netting layer has a thickness of from about 0.25 mm to about 1 mm, for example, form about 0.3 mm to about 0.95 mm, about 0.35 mm to about 0.9 mm, about 0.4 mm to about 0.85 mm, about 0.45 mm to about 0.8 mm, about 0.5 mm to about 0.75 mm, about 0.55 mm to about 0.7 mm, about 0.6 mm to about 0.65 mm.

In some examples, the netting layer has a basis weight of at least about 50 g/m², for example, at least about 75 g/m², at least about 100 g/m², at least about 110 g/m², at least about 115 g/m², at least about 130 g/m², at least about 150 g/m², at least about 175 g/m², at least about 200 g/m², at least about 225 g/m², at least about 250 g/m², at least about 275 g/m², at least about 300 g/m², at least about 310 g/m², at least about 320 g/m², at least about 350 g/m². In some examples, the netting layer has a basis weight of up to about 350 g/m², up to about 320 g/m², up to about 310 g/m², up to about 300 g/m², up to about 275 g/m², up to about 250 g/m², up to about 225 g/m², up to about 200 g/m², up to about 175 g/m², up to about 150 g/m², up to about 130 g/m², up to about 115 g/m², up to about 110 g/m², up to about 100 g/m², up to about 75 g/m², or up to about 50 g/m². In some examples, the netting layer has a basis weight of from about 50 g/m² to about 350 g/m², for example, about 75 g/m² to about 320 g/m², about 100 g/m² to about 310 g/m², about 110 g/m² to about 300 g/m², about 115 g/m² to about 275 g/m², about 130 g/m² to about 250 g/m², about 150 g/m² to about 225 g/m², about 175 g/m² to about 200 g/m². The basis weight of the netting layer may be measured according to ASTM D3776

### Melt-blown layer

The composite fabric comprises a thermoplastic elastomer melt-blown layer. The thermoplastic elastomer melt-blown layer may comprise or consist of any thermoplastic elastomer. The thermoplastic elastomer melt-blown layer may comprise or consist of a melt-blown layer formed from any thermoplastic elastomer or any mixture of thermoplastic elastomers. The thermoplastic elastomer melt-blown layer may comprise or consist of any thermoplastic elastomer described herein or any mixture of thermoplastic elastomers described herein.

In some examples, the thermoplastic elastomer melt-blown layer is a thermoplastic polyurethane (TPU) melt-blown layer, a thermoplastic styrene (TPS) elastomer melt-blown layer, a thermoplastic polyamide (TPA) melt-blown layer, a thermoplastic copolyester (TPC) melt-blown layer, a thermoplastic polyolefin (TPO) melt-blown layer, or a combination thereof. In some examples, the composite fabric comprises a thermoplastic polyurethane melt-blown layer. The thermoplastic elastomer (e.g., TPU) melt-blown layer may be referred to herein as the melt-blown layer.

The melt-blown thermoplastic elastomer layer may comprise any thermoplastic elastomer. The melt-blown elastomer layer may comprise any thermoplastic elastomer capable of being melt-blown. The melt-blown thermoplastic elastomer layer may comprise or consist of elastomer fibres. In some examples, the melt-blown thermoplastic elastomer layer may comprise elastomer fibres and additives, such as a stabilizer, dye, or combination thereof. In some examples, the melt-blown thermoplastic elastomer layer may comprise fibres of any thermoplastic elastomer. In some examples, the melt-blown thermoplastic elastomer layer may comprise fibres of a mixture of thermoplastic elastomers. The melt-blown thermoplastic elastomer layer may comprise fibres of any thermoplastic elastomer described herein.

The melt-blown thermoplastic polyurethane layer may comprise any thermoplastic polyurethane polymer. The melt-blown TPU layer may comprise any thermoplastic polyurethane polymer capable of being melt-blown. The melt-blown thermoplastic polyurethane layer may comprise or consist of TPU polymer fibres. The melt-blown thermoplastic polyurethane layer may comprise TPU polymer fibres and additives, such as a stabilizer, dye or combination thereof. In some examples, the melt-blown TPU layer may comprise fibres of any TPU polymer. In some examples, the melt-blown TPU layer may comprise fibres of a mixture of TPU polymers. The melt-blown TPU layer may comprise fibres of any TPU polymer described herein.

The melt-blown thermoplastic elastomer (e.g., TPU) layer may comprise or consist of a layer formed by melt-blowing a polymer composition comprising or consisting of a thermoplastic elastomer (e.g., a thermoplastic polyurethane polymer). The melt-blown thermoplastic elastomer (e.g., TPU) layer may comprise a layer formed by melt-blowing any polymer composition described herein, which comprises or consists of a thermoplastic elastomer (e.g., a thermoplastic polyurethane polymer).

The thermoplastic elastomer (e.g., thermoplastic polyurethane) of the melt-blown layer may be the same as or different from the thermoplastic elastomer (e.g., thermoplastic polyurethane) of the netting layer. The thermoplastic elastomer (e.g., thermoplastic polyurethane) of the melt-blown layer may be similar to or identical to the thermoplastic elastomer (e.g., thermoplastic polyurethane) of the netting layer.

The melt-blown layer may have a grammage of at least about 50 g/m², for example, at least about 60 g/m², at least about 70 g/m², at least about 80 g/m², at least about 90 g/m², at least about 100 g/m², at least about 110 g/m², at least about 120 g/m², at least about 130 g/m², at least about 140 g/m², at least about 150 g/m², at least about 200 g/m², at least about 250 g/m², at least about 300 g/m², at least about 350 g/m², at least about 400 g/m², at least about 410 g/m², at least about 420 g/m², at least about 430 g/m², at least about 440 g/m², at least about 450 g/m², at least about 460 g/m², at least about 470 g/m², at least about 480 g/m², at least about 490 g/m², at least about 500 g/m², at least about 550 g/m², at least about 600 g/m². The melt-blown layer may have a grammage of up to about 600 g/m², up to about 550 g/m², up to about 500 g/m², for example, up to about 490 g/m², up to about 480 g/m², up to about 470 g/m², up to about 460 g/m², up to about 450 g/m², up to about 440 g/m², up to about 430 g/m², up to about 420 g/m², up to about 410 g/m², up to about 400 g/m², up to about 350 g/m², up to about 300 g/m², up to about 250 g/m², up to about 200 g/m², up to about 150 g/m², up to about 140 g/m², up to about 130 g/m², up to about 120 g/m², up to about 110 g/m², up to about 100 g/m², up to about 90 g/m², up to about 80 g/m², up to about 70 g/m², up to about 60 g/m², or up to about 50 g/m². The melt-blown layer may have a grammage of from about 50 g/m² to about 600 g/m², for example, about 60 g/m² to about 550 g/m², about 70 g/m² to about 490 g/m², about 80 g/m² to about 480 g/m², or about 50 g/m² to about 460 g/m². The melt-blown layer may have a grammage of from about 50 g/m² to about 100 g/m², for example, from about 60 g/m² to about 90 g/m², or about 70 g/m² to about 80 g/m². The melt-blown layer may have a grammage of from about 400 g/m² to about 500 g/m², for example, from about 410 g/m² to about 490 g/m², about 420 g/m² to about 480 g/m², about 430 g/m² to about 470 g/m², about 440 g/m² to about 460 g/m², or about 450 g/m² to about 460 g/m². The grammage (which may also be referred to as the basis weight) may be measured according to ISO 536 and/or ISO 9073-1.

In some examples, the melt-blown layer may have a thickness of at least about 0.1 mm, for example, at least about 0.15 mm, at least about 0.2 mm, at least about 0.25 mm, at least about 0.3 mm, at least about 0.35 mm, at least about 0.4 mm, at least about 0.45 mm, at least about 0.5 mm, at least about 0.55 mm, at least about 0.6 mm, at least about 0.7 mm, at least about 0.8 mm, at about 0.9 mm, at least about 1 mm, at least about 1.1 mm, at least about 1.2 mm, at least about 1.3 mm, at least about 1.4 mm, at least about 1.5 mm, at least about 2 mm, at least about 2.5 mm, at least about 3 mm, at least about 3.5 mm, at least about 4 mm, at least about 4.5 mm, or at least about 5 mm. In some examples, the melt-blown layer may have a thickness of up to about 5 mm, for example, up to about 4.5 mm, up to about 4 mm, up to about 3.5 mm, up to about 3 mm, up to about 2.5 mm, up to about 2 mm, up to about 1.5 mm, up to about 1.4 mm, up to about 1.3 mm, up to about 1.2 mm, up to about 1.1 mm, up to about 1 mm, up to about 0.9 mm, up to about 0.8 mm, up to about 0.7 mm, up to about 0.6 mm, up to about 0.55 mm, up to about 0.5 mm, up to about 0.45 mm, up to about 0.4 mm, up to about 0.35 mm, up to about 0.3 mm, up to about 0.25 mm, up to about 0.2 mm, up to about 0.15 mm. In some examples, the melt-blown layer may have a thickness of from about 0.15 mm to about 5 mm, for example, about 0.2 mm to about 4.5 mm, about 0.25 mm to about 4 mm, about 0.3 mm to about 3.5 mm, about 0.35 mm to about 3 mm, about 0.4 mm to about 2.5 mm, about 0.5 mm to about 2 mm, about 0.55 mm to about 1.5 mm, about 0.6 mm to about 1 mm, about 0.7 mm to about 0.9 mm. The thickness may be measured according to ISO 9073-2 at a contact pressure of 0.5 kPa.

In some examples, the melt-blown layer may have an air permeability of at least about 10 l/m²s, for example, at least about 20 l/m²s, at least about 30 l/m²s, at least about 40 l/m²s, at least about 50 l/m²s, at least about 60 l/m²s. In some examples, the melt-blown layer may have an air permeability of up to about 500 l/m²s, for example, up to about 450 l/m²s, up to about 400 l/m²s, up to about 350 l/m²s, up to about 300 l/m²s, up to about 260 l/m²s. In some examples, the melt-blown layer may have an air permeability of from about 10 l/m²s to about 500 l/m²s, for example, from about 20 l/m²s to about 400 l/m²s, from about 30 l/m²s to about 300 l/m²s or from about 60 l/m²s to about 260 l/m²s. The air permeability may be measured according to ISO 9237 at a pressure of 200 Pa.

In some examples, the melt-blown layer may have a tensile strength of at least about 5 N/5 cm, for example, at least about 10 N/5 cm, at least about 15 N/5 cm, at least about 16 N/5 cm. In some examples, the melt-blown layer may have a tensile strength of up to about 500 N/5 cm, for example, up to about 400 N/5 cm, up to about 300 N/5 cm, up to about 250 N/5 cm. In some examples, the melt-blown layer may have a tensile strength in the machine direction that is greater than the tensile strength in the cross direction. In some examples, the melt-blown layer may have a tensile strength in the machine direction of greater than 18 N/5 cm and a tensile strength in the cross direction of greater than 16 N/5 cm. In some examples, the melt-blown layer may have a tensile strength in the machine direction of greater than 250 N/5 cm and a tensile strength in the cross direction of greater than 250 N/5 cm. In some examples, the melt-blown layer may have a tensile strength of from about 5 N/5 cm to about 500 N/5 cm, for example, about 15 N/5 cm to about 300 N/5 cm. The tensile strength of the melt-blown layer may be measured according to ISO 9073-3:1989.

In some examples, the melt-blown layer may have an elongation at break of at least about 250%, for example, at least about 300%, at least about 350%, at least about 400%. In some examples, the melt-blown layer may have an elongation at break of up to about 700%, for example, up to about 650%, up to about 600%, up to about 550%, up to about 500%. In some examples, the melt-blown layer may have an elongation at break of from about 250% to about 700%, for example, from about 350% to about 500%. The melt-blown layer may have an elongation at break in the machine direction that is the same or different from the elongation at break in the cross direction. The elongation at break may be measured according to ISO 9073-3.

In some examples, the melt-blown layer may comprise thermoplastic elastomer fibres (e.g., TPU fibres) with an average diameter of up to about 8 µm, for example, up to about 7.5 µm, up to about 7 µm, up to about 6.5 µm, up to about 6 µm, up to about 5.5 µm, up to about 5 µm, up to about 4.5 µm, up to about 4 µm, up to about 3.5 µm, up to about 3 µm, up to about 2.5 µm, or up to about 2 µm. In some examples, the melt-blown layer may comprise thermoplastic elastomer fibres (e.g., TPU fibres) with an average diameter of from about 2 µm to about 8 µm , for example, about 2.5 µm to about 7.5 µm, about 3 µm to about 7 µm, about 3.5 µm to about 6.5 µm, about 4 µm to about 6 µm, about 4.5 µm to about 5.5 µm, or about 2 µm to about 5 µm. The average diameter of the fibres of the melt-blown layer may be measured by using a scanning electron microscope and software such as Fibermetric V2.1.

### Thermoplastic elastomers

The thermoplastic elastomer may be any thermoplastic elastomer. In some examples, the thermoplastic elastomer may be a copolymer or a physical mixture of two or more polymers. In some examples, the thermoplastic elastomer is a copolymer. The copolymer may be a block copolymer comprising hard and soft segments. In some examples, the hard segments of the polymer are crystalline segments and the soft segments of the polymer are amorphous segments. The physical mixture of two or more polymers may comprise a mixture of a thermoset polymer and a thermoplastic polymer.

In some examples, the thermoplastic elastomer may be a thermoplastic polyurethane (TPU), a thermoplastic styrene (TPS) elastomer, a thermoplastic polyamide (TPA), a thermoplastic copolyester (TPC), a thermoplastic polyolefin (TPO), or a combination thereof. In some examples, the thermoplastic elastomer may be a thermoplastic polyurethane.

In some examples, the thermoplastic styrene (TPS) elastomer may be a styrene block copolymer. The thermoplastic styrene elastomer may be a tri-block copolymer comprising a polydiene or hydrogenated polydiene block disposed between two polystyrene blocks. In some examples, the thermoplastic styrene elastomer may be styrene-ethylene-styrene, styrene-butylene-styrene, or styrene-ethylene-butylene-styrene.

In some examples, the thermoplastic polyamide (TPA) may be a polyamide block copolymer. The thermoplastic polyamide may be a copolymer comprising polyamide and polyether segments or polyamide and polyester segments. In some examples, the poly amide block(s) may provide the hard segment(s) of the elastomer and the polyether or polyester block(s) may provide the soft segment(s) of the elastomer.

In some examples, the thermoplastic polyester (TPC) may be a block copolymer of a polyester and/or a polyether. In some examples, the thermoplastic polyester (TPC) may be a poly(ether-ester) copolymer. In some examples, the thermoplastic polyester may be a block copolymer of a polyester and a polyether. In some examples, the thermoplastic polyester may comprise hard and soft segments.

In some examples, the thermoplastic polyolefin (TPO) may be a mixture of a polyolefin and a non-cross-linked elastomer or a polyolefin comprising hard and soft segments. In some examples, the thermoplastic polyolefin may comprise polypropylene, polyethylene, block polypropylene-polyethylene copolymer or a mixture thereof.

The thermoplastic elastomer of the melt-blown layer may have a Shore hardness of 65A-85A, a Shore hardness of 80A-50D; or a Shore hardness of 90A-65D; and/or the thermoplastic elastomer of the netting layer has a Shore hardness of 65A-85A, a Shore hardness of 80A-50D; or a Shore hardness of 90A-65D. In some examples, the Shore hardness of the thermoplastic elastomer of the melt-blown layer is the same or different from the Shore hardness of the thermoplastic elastomer of the netting layer. In some examples, the Shore hardness of the thermoplastic elastomer of the melt-blown layer is the same as (e.g., identical to) the Shore hardness of the thermoplastic elastomer of the netting layer. In some examples, the thermoplastic elastomer of the melt-blown layer has a Shore hardness of from 65A to 85A and the thermoplastic elastomer of the netting layer has a Shore hardness of from 65A to 85A. In some examples, the thermoplastic elastomer of the melt-blown layer has a Shore hardness of from 80A to 50D and the thermoplastic elastomer of the netting layer has a Shore hardness of from 80A to 50D. In some examples, the thermoplastic elastomer of the melt-blown layer has a Shore hardness of 90A to 65D and the thermoplastic elastomer of the netting layer has a Shore hardness of 90A to 65D. The Shore hardness may be measured according to DIN ISO 7619-1:2012. In some examples, the Shore hardness of the thermoplastic elastomer of the melt-blown layer is the same as or different from the Shore hardness of the thermoplastic elastomer of the netting layer. In some examples, the Shore hardness of the thermoplastic elastomer of the melt-blown layer is similar or identical to the Shore hardness of the thermoplastic elastomer of the netting layer. In some examples, the Shore hardness of one polymer is similar to the Shore hardness of another polymer if the two Shore hardness values are within 10% of each other, for example, within 5% of each other or within 1% of each other.

### Thermoplastic polyurethane polymers

Thermoplastic polyurethane polymers are the reaction product of a polyisocyanate (e.g., a diisocyanate) with at least one polyalcohol (polyol). A polyisocyanate may be defined as a molecule comprising two or more isocyanate groups (e.g., a diisocyanate). A polyalcohol may be defined as a molecule comprising two or more hydroxyl groups (e.g., diol). A TPU polymer may be the reaction product of a diisocyanate with a diol or a mixture of diols.

Many TPU polymers are block co-polymers comprising hard and soft segments. In some examples, the TPU polymer is the reaction product of a diisocyanate with a short-chain diol (for example, a C1 to C10 diol) and a long-chain diol (for example, a polymer comprising at least two hydroxyl functional groups, such as a polyester or polyether). The short-chain diol may be referred to as a chain extender.

In some examples, the TPU polymer may be a polyether-based TPU polymer, a polyester-based TPU polymer or a mixture thereof. In some examples, the TPU polymer may be a polyether-based TPU polymer. A polyether-based TPU polymer may be a copolymer of a polyisocyanate (e.g., a diisocyanate), a polyether polyol (e.g., a polyether diol), and a chain extender (e.g., a diol, a diamine, an aminoalcohol or a mixture thereof). In some examples, the TPU polymer may be a polyester-based TPU polymer. A polyester-based TPU polymer may be a copolymer of a polyisocyanate (e.g., a diisocyanate), a polyester polyol (e.g., a polyester diol), and a chain extender (e.g., a diol, a diamine, an aminoalcohol or a mixture thereof).

In some examples, the TPU polymer may be an aromatic polyurethane or an aliphatic polyurethane. In some examples, the TPU may be an aromatic polyether polyurethane or an aromatic polyester polyurethane. In some examples, the TPU may be an aromatic polyether polyurethane. An aromatic polyether polyurethane may be a copolymer of an aromatic polyisocyanate (e.g., an aromatic diisocyanate), a polyether polyol (e.g., a polyether diol), and a chain extender (e.g., a diol, a diamine, an aminoalcohol or a mixture thereof). An aliphatic polyether polyurethane may be a copolymer of an aliphatic polyisocyanate (e.g., an aliphatic diisocyanate), a polyether polyol (e.g., a polyether diol), and a chain extender (e.g., a diol, a diamine, an aminoalcohol or a mixture thereof).

In some examples, an aromatic polyether polyurethane may be formed by the reaction of an aromatic diisocyanate with a polyether diol (and optionally a chain extender). In some examples, an aromatic polyester polyurethane may be formed by reaction of an aromatic diisocyanate with a polyester diol (and optionally a chain extender). In some examples, the thermoplastic polyurethane comprises a polymer formable by polymerization of an aromatic diisocyanate with a polyether (and optionally a chain extender).

In some examples, the polyisocyanate may be a diisocyanate selected form from (i) aromatic diisocyanates, such as methylene[bis(phenyl isocyanate)] (MDI) (e.g., 4,4'-methylene[bis(phenyl isocyanate)], 2,4'-methylene[bis(phenyl isocyanate)], or 2,2'-methylene[bis-(phenyl isocyanate)]), xylylene diisocyanate (XDI) (e.g., m-xylylene diisocyanate), tetra methyl xylylene diisocyanate (e.g., 1,3-bis(1-isocyanato-1-methylethyl)benzene), phenylene diisocyanate (e.g., 1,3-phenylene diisocyanate, or 1,4-phenylene diisocyanate), naphthalene diisocyanate (e.g., 1,5-naphthalene diisocyanate), dimethyl biphenyl diisocyanate (TODI) (e.g., 3,3'-dimethyl-4,4'-biphenylene diisocyanate), and toluene diisocyanate (TDI) (e.g., 2,4-toluene diisocyanate or 2,6-toluene diisocyanate; (ii) aliphatic diisocyanates, such as isophorone diisocyanate (IPDI), cyclohexyl diisocyanate (CHDI) (e.g., 1,4-cyclohexyl diisocyanate), decane diisocyanate (e.g., decane-1,10-diisocyanate), dodecane diisocyanate (e.g., dodecane-1,12-diisocyanate), hexamethylene diisocyanate (HDI), cyclohexyl diisocyanate (e.g., 1,4-cyclohexyl diisocyanate), bis(isocyanatomethyl)cyclohexane (CHMDI) (e.g., 1,3-bis(isocyanatomethyl)cyclohexane, or 1,4-bis(isocyanatomethyl)cyclohexane)), dicyclohexylmethane diisocyanate (HMDI) (e.g., dicyclohexylmethane-4,4'-diisocyanate), hydrogenated diphenylmethane diisocyanate, and hydrogenated tolylene diisocyanate. In some examples, the polyisocyanate may be a polymeric polyisocyanate, such as polymeric diphenylmethane isocyanate or polymeric hydrogenated diphenylmethane isocyanate.

In some examples, the polyol may be a polyether, a polyester, a polycaprolactone or a mixture thereof. In some examples, the polyol may be a polyether, a polyester, or a mixture thereof. In some examples, the polyol may be a polyalkylene oxide (e.g., polyethylene oxide, polypropylene oxide or mixtures thereof), the reaction product of a dicarboxylic acid with an diol, or a mixture thereof.

In some examples, the polyol comprises a polymeric molecule comprising at least two hydroxyl functional groups. In some examples, the polyol comprises a polymeric molecule comprising two hydroxyl functional groups, such as a polyether diol, a polyester diol, a polycaprolactone diol, or a mixture thereof. In some examples, the polyether polyol comprises a hydroxyl-terminated polyether, that is, a polyether diol in which the hydroxyl groups are terminal groups. In some examples, the polyether polyol comprises a hydroxyl-substituted polyether, that is, a polyether with hydroxyl substituents along the polyether chain.

In some examples, the polyether polyol may be a polymer of an alkylene glycol. In some examples, the polyether polyol may comprise a polymer of diethylene glycol, dipropylene glycol, 1,4-butane diol, 1,6-hexanediol, 1,3-butanediol, 1,5-pentanediol, 1,4-cyclohexanedimethanol, neopentyl glycol, 1,9-nonanediol, 1,12-dodecanediol and the like. In some examples, the polyether polyol may comprise a polyethylene glycol) diol, poly(oxypropylene) diol or a poly(oxytetramethylene) diol. In some examples, the polyether polyol may be a polyglycerol or a polysaccharide. In some examples, the polysaccharide may be a polysucrose or polysorbitol.

In some examples, the polyester polyol may be a copolymer of a dicarboxylic acid and a diol.

In some examples, the polyurethane comprises a chain extender. The chain extender may be selected from a diol, a diamine, an aminoalcohol or a mixture thereof. Suitable chain extenders include aliphatic diols, cycloaliphatic diols, aromatic diols, aliphatic diamines, cycloaliphatic diamines, aromatic diamines, aliphatic aminoalcohols, cycloaliphatic aminoalcohols, aromatic aminoalcohols, or mixtures thereof. In some examples, the chain extender may comprise a diol, a diamine, an aminoalcohol and/or a mixture thereof and may have from 1 to about 20 carbon atoms, for example, 2 to 12 carbon atoms, or 4 to 10 carbon atoms. The chain extender may be selected rom diethylene glycol, dipropylene glycol, 1,4-butane diol, 1,6-hexanediol, 1,3-butanediol, 1,5-pentanediol, 1,4-cyclohexanedimethanol, neopentyl glycol, 1,9-nonanediol, 1,12-dodecanediol, benzene glycol (e.g., hydroquinone bis(betahydroxyethyl)ether (HQEE), 1,3-di(2-hydroxyethyle)benzene, 1,2-di(2-hydroxyethoxy)benzene, or combinations thereof), xylene glycol (e.g., 1,4-di(hydroxymethyl)benzene or 1,2-di(hydroxymethyl)benzene), ethanediamine, propanediamine, beutanediamine, pentyldiamine, hexyldiamine, aminoethanol, aminopropanol, aminobutanol, aminopentanol, aminohexanol and mixtures thereof.

In some examples, the ratio of polyol (e.g., polyether, polyester or mixture thereof) to chain extender molecules may be from 10:1 to 1:1, for example, 5:1 to 1:1 or 1:1.

The thermoplastic polyurethane of the melt-blown layer may have a Shore hardness of 65A-85A, a Shore hardness of 80A-50D; or a Shore hardness of 90A-65D; and/or the thermoplastic polyurethane of the netting layer has a Shore hardness of 65A-85A, a Shore hardness of 80A-50D; or a Shore hardness of 90A-65D. In some examples, the Shore hardness of the thermoplastic polyurethane of the melt-blown layer is the same or different from the Shore hardness of the thermoplastic polyurethane of the netting layer. In some examples, the Shore hardness of the thermoplastic polyurethane of the melt-blown layer is the same as (e.g., identical to) the Shore hardness of the netting layer. In some examples, the thermoplastic polyurethane of the melt-blown layer has a Shore hardness of from 65A to 85A and the thermoplastic polyurethane of the netting layer has a Shore hardness of from 65A to 85A. In some examples, the thermoplastic polyurethane of the melt-blown layer has a Shore hardness of from 80A to 50D and the thermoplastic polyurethane of the netting layer has a Shore hardness of from 80A to 50D. In some examples, the thermoplastic polyurethane of the melt-blown layer has a Shore hardness of 90A to 65D and the thermoplastic polyurethane of the netting layer has a Shore hardness of 90A to 65D. The Shore hardness may be measured according to DIN ISO 7619-1:12. In some examples, the Shore hardness of the thermoplastic polyurethane of the melt-blown layer is the same as or different from the Shore hardness of the thermoplastic polyurethane of the netting layer. In some examples, the Shore hardness of the melt-blown layer is similar or identical to the Shore hardness of the thermoplastic polyurethane of the netting layer. In some examples, the Shore hardness of one polymer is similar to the Shore hardness of another polymer if the two Shore hardness values are within 10% of each other, for example, within 5% of each other or within 1% of each other.

Suitable TPU polymers that can be used for the TPU melt-blown layer are Desmopan^{™} 9365D (available from Covestro^{™}) and Elastollan^{™} EXP 1175 A 10 (available from BASF^{™}). Suitable TPU polymers that can be used for the TPU netting layer are Desmopan^{™} 9365D (available from Covestro^{™}).

### Additional layers

The composite fabric may additionally comprise an adhesive layer disposed between the thermoplastic elastomer (e.g., thermoplastic polyurethane) melt-blown layer and the thermoplastic elastomer (e.g., thermoplastic polyurethane) netting layer. In other examples, the thermoplastic elastomer (e.g., thermoplastic polyurethane) melt-blown layer is self-adhered to the thermoplastic elastomer (e.g., thermoplastic polyurethane) netting layer.

In some examples, the adhesive layer comprises a pressure sensitive adhesive layer or a hot melt adhesive. In some examples, the adhesive layer may comprise an acrylic polymer, a thermoplastic polyurethane polymer, a rubber adhesive.

Without wishing to be bound by theory, an adhesive layer may be used to adhere the melt-blown TPU layer to the TPU netting layer if the two polymers are not sufficiently chemically similar to adhere together without an adhesive. Without wishing to be bound by theory, an adhesive layer may be used to adhere the melt-blown TPU layer to the TPU netting layer if the TPU polymers comprise or consist of inelastic TPU polymers or TPU polymers with low elasticity.

### Method of producing a composite fabric

Also described herein are methods of producing a composite fabric. The composite fabric may be any composite fabric described herein. The method of producing a composite fabric may comprise melt-blowing a thermoplastic elastomer (e.g., thermoplastic polyurethane) onto a thermoplastic elastomer (e.g., thermoplastic polyurethane) netting layer. Alternatively, the method may comprise laminating a melt-blown layer to a netting layer. In some examples, the lamination process may comprise heat sealing, for example, ultrasonic sealing, calendering or the like. The netting layer may be any netting layer described herein. In some examples, the netting layer comprises apertures with a width of at least about 0.5 mm and/or the netting layer may have a thickness of at least about 0.25 mm.

The method of producing a composite fabric may comprise melt-blowing any thermoplastic elastomer (e.g., any thermoplastic polyurethane) described herein onto a thermoplastic elastomer (e.g., thermoplastic polyurethane) netting layer. The method of producing a composite fabric may comprise melt-blowing any thermoplastic elastomer (e.g., any thermoplastic polyurethane) described herein onto a thermoplastic elastomer (e.g., thermoplastic polyurethane) netting layer to form a melt-blown thermoplastic elastomer (e.g., TPU) layer. The method of producing a composite fabric may comprise melt-blowing a thermoplastic elastomer (e.g., thermoplastic polyurethane) onto a thermoplastic elastomer (e.g., thermoplastic polyurethane) netting layer to produce a composite fabric comprising a melt-blown thermoplastic elastomer (e.g., thermoplastic polyurethane) layer; and a thermoplastic elastomer (e.g., thermoplastic polyurethane) netting layer.

In some examples, the method may comprise melt-blowing a thermoplastic elastomer (e.g., thermoplastic polyurethane) directly onto a thermoplastic elastomer (e.g., TPU) netting layer. In some examples, the method may comprise melt-blowing a thermoplastic elastomer (e.g., thermoplastic polyurethane) onto an adhesive layer, which may be disposed on a thermoplastic elastomer (e.g., TPU) netting layer. In some examples, the method may comprise applying an adhesive to a thermoplastic elastomer (e.g., TPU) netting layer and then melt-blowing a thermoplastic elastomer (e.g., TPU) onto the adhesive layer disposed on the netting layer. In some examples, the method may comprise forming a melt-blown thermoplastic elastomer layer (e.g., a melt-blown TPU layer) and then contacting the melt-blown layer with a thermoplastic elastomer netting layer (e.g., a thermoplastic polyurethane netting layer).

In some examples, the melt-blown thermoplastic elastomer fibres (e.g., TPU fibres) contact the thermoplastic elastomer (e.g., TPU) netting layer at a temperature that induces adhesion of the melt-blown thermoplastic elastomer (e.g., TPU) to the thermoplastic elastomer (e.g., TPU) netting layer. In some examples, a melt-blown thermoplastic elastomer layer may be laminated to a thermoplastic elastomer netting layer. In some examples, the lamination process may comprise heating the melt-blown thermoplastic elastomer layer and/or the thermoplastic elastomer netting layer to a temperature that induces adhesion of the melt-blown thermoplastic elastomer to the thermoplastic elastomer netting layer, forming the composite fabric. In some examples, the method comprises melt-blowing thermoplastic elastomer (e.g., TPU) onto a thermoplastic elastomer (e.g., TPU) netting layer, wherein the melt-blown thermoplastic elastomer (e.g., TPU) contacts the thermoplastic elastomer netting layer (e.g., TPU netting layer) at a temperature that induces adhesion of the melt-blown thermoplastic elastomer (e.g., TPU) to the thermoplastic elastomer netting layer (e.g., the TPU netting layer). In some examples, the method comprises melt-blowing thermoplastic elastomer (e.g., TPU) onto a thermoplastic elastomer (e.g., TPU) netting layer to form a melt-blown thermoplastic elastomer layer (e.g., a TPU layer) and then laminating the melt-blown thermoplastic elastomer layer (e.g., TPU layer) to the thermoplastic elastomer netting layer (e.g., TPU netting layer). In some examples, the method may comprise melt-blowing thermoplastic elastomer to form a melt-blown thermoplastic elastomer layer and then laminating the melt-blown thermoplastic elastomer layer to the thermoplastic elastomer netting layer. In some examples, the lamination process may comprise heat sealing, for example, ultrasonic sealing, calendering or the like.

The melt-blowing process used in the method of producing a composite fabric may be any melt-blowing process known in the art. A description of the melt-blowing process can be found in, for example, the article Superfine Thermoplastic Fibres by Van A. Wente (Ind. Eng. Chem. 1956, 48, 8, 1342-1346), which is incorporated by reference in its entirety.

In some examples, the method of producing a composite fabric may further comprise extruding a thermoplastic elastomer (e.g., a thermoplastic polyurethane) to produce an extruded thermoplastic elastomer netting layer (e.g., a thermoplastic polyurethane netting layer). In some examples, the method of producing a composite fabric may comprise coextruding a plurality of first direction strands of thermoplastic elastomer (e.g., TPU) and a plurality of second direction strands of thermoplastic elastomer (e.g., TPU), wherein the relative orientation of the first and second direction strands forms the shape of the apertures in the netting layer. In some examples, the method of producing a composite fabric may comprise coextruding a plurality of first direction strands of thermoplastic elastomer (e.g., TPU); a plurality of second direction strands of thermoplastic elastomer (e.g., TPU); and a plurality of third direction strands of thermoplastic elastomer (e.g., TPU), wherein the relative orientation of the first, second, and third direction strands forms the shape of the apertures in the netting layer. In some examples, the method of producing a composite fabric may comprise coextruding a plurality of first direction strands of thermoplastic elastomer (e.g., TPU); a plurality of second direction strands of thermoplastic elastomer (e.g., TPU); a plurality of third direction strands of thermoplastic elastomer (e.g., TPU); and a plurality of fourth direction strands of thermoplastic elastomer (e.g., TPU), wherein the relative orientation of the first, second, third and fourth direction strands forms the shape of the apertures in the netting layer. In some examples, the method of producing a composite fabric may further comprise coextruding a plurality of machine-direction strands of thermoplastic elastomer (e.g., thermoplastic polyurethane) and a plurality of cross-direction strands of thermoplastic elastomer (e.g., thermoplastic polyurethane) to form an extruded thermoplastic elastomer (e.g., thermoplastic polyurethane) netting layer. In some examples, the method of producing a composite fabric may further comprise coextruding a plurality of machine-direction strands of thermoplastic elastomer (e.g., thermoplastic polyurethane) and a plurality of strands of thermoplastic elastomer (e.g., thermoplastic polyurethane) oriented in another direction or multiple other directions to form an extruded thermoplastic elastomer (e.g., thermoplastic polyurethane) netting layer. This process may produce a thermoplastic elastomer netting layer (e.g., TPU netting layer) comprising a plurality of machine direction strands integrally joined to a plurality of cross direction strands.

In some examples, the extruded thermoplastic elastomer (e.g., TPU) netting layer may be produced by using an extruder having a reciprocating die. The method of producing a composite fabric may comprise producing a thermoplastic elastomer netting layer (e.g., a TPU netting layer) by using an extruder having a reciprocating die. The method may further include integrally bonding the coextruded strands of the netting layer in the reciprocating die of the extruder. The coextruded strands of the netting layer may be integrally bonded in the reciprocating die by melting the polymer to form a molten net and then solidifying the molten net to form the netting layer.

In some examples, the netting layer is produced by extruding the polymer through two dies that rotate in opposite directions. Both dies may have grooves through which the melted polymer flows, forming a net. The net may be produced as a cylindrical tube of netting material. In some examples, the diameter of the cylindrical tube is increased after the polymer has been extruded through the dies, stretching and/or expanding the net and increasing the size of the apertures in the net. The cylindrical tube of netting may be solidified by cooling, for example, by submersion in water. Once cooled, the cylindrical tube of netting may be cut to produce a netting layer, that is, a flat netting layer.

Suitable TPU netting layers are available from Conwed.

### EXAMPLES

The following illustrates examples of the methods and other aspects described herein. Thus, these Examples should not be considered as limitations of the present disclosure but are merely in place to teach how to make examples of the present disclosure.

### Materials

TPU netting 1: an extruded thermoplastic polyurethane netting (having square apertures) was purchased from Conwed (TP1200-001). TPU netting 1 has a basis weight of 75 lb/1000 sq ft (312 g/m²; measured according to ASTM D3776); a strand count of 36 strands/inch (about 14.2 strands/cm) in the machine direction and 34 strands/inch (about 13.4 strands/cm) in the cross direction (measured according to ASTM D3775); a mesh size of 0.71x0.75 mm, a thickness of 0.024 inches (0.60 mm); a break strength of 43 Ibs/inch (191 N/25 mm) in the machine direction and 30 Ibs/in (133 N/25 mm) in the cross-direction. The strands of the netting may have a thickness of 381 µm in the machine direction and 676 µm in the cross direction, as measured by SEM, where the thickness of a strand is the distance across the strand in a direction perpendicular to the thickness of the netting layer and perpendicular to the direction of the strand.

Melt-blown layer 1: A polyether-TPU melt-blown layer was produced with a grammage of 200 g/m² (measured according to ISO 9073-1), a thickness (at 0.5 kPa) of 0.50 mm (measured according to ISO 9073-2), an air permeability (at 200 Pa) of 85 l/m² (as determined by ISO 9237), a tensile strength of 117 N/5 cm in the machine direction and 119 N/5 cm in the cross direction (measured according to ISO 9073-3), and an elongation at break of 490% in the machine direction and 504% in the cross direction (measured according to ISO 9073-3). The polyether-TPU polymer used to form melt-blown layer 1 was Desmopan 3385A.

### Example

A composite fabric was produced by point calendering melt-blown layer 1 onto TPU netting 1 to produce a composite fabric in which melt-blown layer 1 is disposed on TPU netting 1.

### Test results

| | Tear strength (N) | | Tensile strength (N/5 cm) | | Elongation at break (%) | |
|---|---|---|---|---|---|---|
| | MD | CD | MD | CD | MD | CD |
| Example | 12.0 | 16.1 | 160 | 100 | 490 | 425 |
| Melt-blown layer 1 | 7.5 | 7.6 | 68 | 67 | 510 | 520 |

### Measurement of tear strength

Tear strength was measured by cutting 100x25 mm strips in the MD and the CD direction. On the short edge (25 mm), the strip was cut in half for half the length of the strip (i.e., for a length of 50 mm), resulting in two "legs" with a width 12.5 mm each. These two legs were placed in a universal tear strength testing machine at 50 mm gauge length and the test was carried out at 100 mm/min. The force when breaking the sample was recorded as the tear strength.

### Measurement of tensile strength and elongation at break

A modified version of ISO 9073-3 was used to characterize the examples and the melt-blown layer 1 reference: strips of 25 mm width were tested at a gauge length of 50 mm and a head speed of 100 mm/min.

While the invention has been described with reference to certain examples, those skilled in the art will appreciate that various modifications, changes, omissions, and substitutions can be made without departing from the disclosure. It is intended, therefore, that the invention be limited by the scope of the following claims and their equivalents. Unless otherwise stated, the features of any dependent claim can be combined with the features of any of the other dependent claims and any of the independent claims.

## Claims

1. A composite fabric comprising:
a melt-blown thermoplastic elastomer layer; and
a thermoplastic elastomer netting layer;
wherein the netting layer comprises apertures with a longest dimension of at least about 0.5 mm; and
wherein the netting layer has a thickness of at least about 0.25 mm.

2. The composite fabric according to claim 1, wherein the melt-blown thermoplastic elastomer layer is a thermoplastic polyurethane melt-blown layer, a thermoplastic styrene elastomer melt-blown layer, a thermoplastic polyamide melt-blown layer, a thermoplastic copolyester melt-blown layer, a thermoplastic polyolefin melt-blown layer, or a combination thereof.

3. The composite fabric according to any preceding claim, wherein the thermoplastic elastomer netting layer is a thermoplastic polyurethane netting layer, a thermoplastic styrene elastomer netting layer, a thermoplastic polyamide netting layer, a thermoplastic copolyester netting layer, a thermoplastic polyolefin netting layer, or a combination thereof.

4. The composite fabric according to any preceding claim, wherein the melt-blown thermoplastic elastomer layer is a melt-blown thermoplastic polyurethane layer; and/or wherein the thermoplastic elastomer netting layer is a thermoplastic polyurethane netting layer.

5. The composite fabric according to any preceding claim, wherein the thermoplastic polyurethane netting layer is an extruded thermoplastic elastomer netting layer.

6. The composite fabric according to claim 5, wherein the extruded thermoplastic netting layer comprises machine-direction strands and cross-direction strands and the machine direction strands are substantially perpendicular or perpendicular to the cross-direction strands.

7. The composite fabric according to any preceding claim, wherein the netting layer comprises apertures with a shortest dimension of from about 0.5 mm to about 5 mm, for example, 0.5 mm to 1 mm; and/or
wherein the netting layer comprises apertures with a second longest dimension of from about 0.5 mm to about 5 mm, for example, 1.5 mm to 3 mm.

8. The composite fabric according to any preceding claim, wherein the netting layer has a thickness of from about 0.25 mm to about 1 mm; and/or
wherein the melt-blown layer has a thickness of from about 0.1 mm to about 5 mm, for example, about 0.2 mm to about 1.2 mm.

9. The composite fabric according to any preceding claim, wherein the melt-blown layer has a grammage of from about 25 g/m² to about 600 g/m².

10. The composite fabric according to any preceding claim, wherein the thermoplastic elastomer of the melt-blown layer is similar or identical to the thermoplastic elastomer of the netting layer.

11. The composite fabric according to any preceding claim, wherein the thermoplastic elastomer of the melt-blown layer has a Shore hardness of 65A-85A, a Shore hardness of 80A-50D; or a Shore hardness of 90A-65D.

12. The composite fabric according to any preceding claim, wherein the thermoplastic elastomer of the netting layer has a Shore hardness of 65A-85A, a Shore hardness of 80A-50D; or a Shore hardness of 90A-65D.

13. The composite fabric according to any preceding claim, wherein the thermoplastic elastomer is a thermoplastic polyurethane and the thermoplastic polyurethane comprises a polymer formable by polymerization of an aromatic diisocyanate with a polyether.

14. The composite fabric according to any preceding claim, wherein the thermoplastic elastomer melt-blown layer is self-adhered to the thermoplastic elastomer netting layer; or wherein an adhesive layer is disposed between the thermoplastic elastomer melt-blown layer and the thermoplastic elastomer netting layer.
